# EUROPEAN PATENT APPLICATION

(11) **EP 2 590 010 A1**
(43) Date of publication of application: **08.05.2013**
(21) Application number: 10853922.2
(22) Date of filing: 23.08.2010
(51) Int. Cl.: G02F 1/13357, F21S 8/00, F21V 23/00

(54) **LIQUID CRYSTAL DISPLAY AND BACKLIGHT MODULE FOR DETECTING ABNORMITY OF LAMP TUBE**

(30) Priority: 02.07.2010 CN 201010219389
(71) Applicant: Shenzhen China Star Optoelectronics Technology Co. Ltd, Shenzhen, Guangdong 518106 (CN)
(72) Inventor: HE, Chengming, Shenzhen, Guangdong 518106 (CN); YANG, Chingyuan, Shenzhen, Guangdong 518106 (CN)
(74) Representative: Isarpatent
(86) International application number: PCT/CN2010/076253
(87) International publication number: WO 2012/000217

(57) **Abstract**

A backlight module (10) detecting abnormity of lamp tubes (22) and an LCD (20, 80) are provided. The backlight module (10, 90) includes a few of lamp tubes (22), a protective circuit (36) electrically connected to two ends of each lamp tube (22), and a driver (25). The protective circuit (36) includes a first detection circuit (50) and a second detection circuit (52) for detecting the voltage of the first and second ends of the lamp tubes (22) respectively, and a comparator (54) electrically connected to the first and second detection circuits (50, 52). The comparator (54) can produce a protective signal (56) based on the difference of the detected voltage of the first and second detection circuits (50, 52). When the lamp tube (22) is abnormal, the protective signal (56) can be beyond a predetermined value, thus the driver (25) adjusts the supply voltage for the lamp tube.

## Description

### FIELD OF THE INVENTION

The present invention relates to a backlight module and a liquid crystal display (LCD) having the backlight module, and more particularly, to a backlight module which can detect abnormity of lamp tube and an LCD having the backlight module.

### BACKGROUND OF THE INVENTION

With a rapid development of monitor types, novel and colorful monitors with high resolution, e.g., liquid crystal displays (LCDs), are indispensable components used in various electronic products such as monitors for notebook computers, personal digital assistants (PDAs), digital cameras, and projectors. The demand for the novel and colorful monitors has increased tremendously.

Most of the TFT-LCDs utilize Cold Cathode Fluorescent Lamps (CCFL) as backlight sources. The CCFL can light when noble gas inside the lamp is driven by a high-frequency driving voltage source. In addition, both the number of the CCFLs and the length of the CCFL are required to increase in the backlight module due to increase size of the liquid crystal panel, which results in increasing lighting voltage relatively. The CCFLs are parallel arranged in the inner part of the backlight module. Therefore, the leakage current increases correspondingly with increasing the length of the CCFL and the operating voltage applied to the CCFL after lighting the CCFLs.

Conventionally, a driver of the CCFL applies high voltage to one end of the CCFL, that is to say, the driver applies high frequency driving voltage to one end of the CCFL, and the other end of the CCFL is coupled to ground or to be floated. Thus, the CCFL has a high voltage on one end and a low voltage on the other end. When the driving voltage increases, amount of the leakage current is nonlinearly and rapidly greater, that is to say, the driving voltage is higher, the amount of the leakage current is greater. Furthermore, the current of the other end of the CCFL applied to low voltage is rapidly decreased when the other end of the CCFL applied to low voltage is far away from the end of the CCFL applied high voltage, which results in uneven brightness and incoordination on image display in the liquid crystal display.

Therefore, the present driver usually employs a transformer with a primary winding in series to balance the current output to the lamp tube. But it requires a larger size of printed circuit board (PCB) and higher design costs due to use a transformer to balance the current. Thereby, it applies ballast capacitor in series in front of the CCFL to balance the current in the design of driver so as to simplify the design and reduce the cost. The design mostly uses a single transformer to drive all of the CCFLs and then utilizes ballast capacitor to be a balancing current device of the CCFL. However, the problem is that a protection circuit cannot perform its function when the CCFL is broken or the ballast capacitor cracks or is poorly soldered; it exists some potential dangers.

### SUMMARY OF THE INVENTION

An object of the present invention is to provide a liquid crystal display (LCD) for detecting abnormity of lamp tubes, which can perform real-time protection when lamp tubes or ballast capacitors are abnormal.

In one aspect of the present invention, a liquid crystal display comprises a liquid crystal display panel, a lamp tube comprising a first end and a second end, an driver comprising an input end electrically connected to an external power supply for inverting the signal of the external power supply into a supply voltage based on a control signal, a first transformer electrically connected to the first end of the lamp tube, for converting the supply voltage into a first driving voltage signal, and outputting the first driving voltage signal to the first end of the lamp tube, a second transformer electrically connected to the second end of the lamp tube for converting the supply voltage into a second driving voltage signal, and outputting the second driving voltage signal to the second end of the lamp tube, a first detecting circuit electrically connected to the first end of the lamp tube, for detecting voltage applied to the first end of the lamp tube, a second detecting circuit electrically connected to the second end of the lamp tube, for detecting voltage applied to the second end of the lamp tube, a comparator electrically connected to the first detecting circuit and the second detecting circuit, for generating a protection signal based on a difference between the voltages applied to the first and second ends of the lamp tube, wherein the driver adjusts the supply voltage in response to an amplitude of the protection signal in excess of a predetermined value corresponding to an open-circuit of the lamp tube.

In another aspect of the present invention, a backlight module comprises a lamp tube comprising a first end and a second end, an driver comprising an input end electrically connected to an external power supply for inverting the signal of the external power supply into a supply voltage based on a control signal, a first transformer electrically connected to the first end of the lamp tube, for converting the supply voltage into a first driving voltage signal, and outputting the first driving voltage signal to the first end of the lamp tube, a second transformer electrically connected to the second end of the lamp tube for converting the supply voltage into a second driving voltage signal, and outputting the second driving voltage signal to the second end of the lamp tube, a first detecting circuit electrically connected to the first end of the lamp tube, for detecting voltage applied to the first end of the lamp tube, a second detecting circuit electrically connected to the second end of the lamp tube, for detecting voltage applied to the second end of the lamp tube, a comparator electrically connected to the first detecting circuit and the second detecting circuit, for generating a protection signal based on a difference between the voltages applied to the first and second ends of the lamp tube, wherein the driver adjusts the supply voltage in response to an amplitude of the protection signal in excess of a predetermined value corresponding to an open-circuit of the lamp tube.

According to the present invention, the lamp tube is a Cold Cathode Fluorescent Lamp (CCFL).

According to the present invention, a phase difference between the first driving voltage signal and the second driving voltage signal is 180 degrees.

According to the present invention, a voltage calculator electrically connected to the comparator and the driver is used for generating a control signal having a duty cycle depending on the amplitude of the protection signal.

The present invention monitors lamp tubes by detecting voltages applied to their ends. Once lamps tubes or ballast capacitors are in an abnormal state, there will be a wide range of variations in voltages applied to the ends of the lamp tubes. Any abnormality can be detected by a comparator detecting a difference between voltages applied to the ends of lamp tubes and a voltage calculator calculating voltage values of control signals. Once an abnormality occurs, a protection circuit will output a voltage signal to the voltage calculator to start to perform a protection operation.

These and other objects of the claimed invention will no doubt become obvious to those of ordinary skill in the art after reading the following detailed description of the preferred embodiment that is illustrated in the various figures and drawings.

### BRIEF DESCRIPTION OF THE DRAWINGS

Fig. 1 is a schematic diagram of a liquid crystal display (LCD) according to an embodiment of the present invention.
Fig. 2 is a schematic diagram of an LCD according to another embodiment of the present invention.
Fig. 3 illustrates a voltage variation diagram in normal and abnormal states when the lamp tubes of the present invention are driven.

### DETAILED DESCRIPTION OF THE PREFERRED EMBODIMENTS

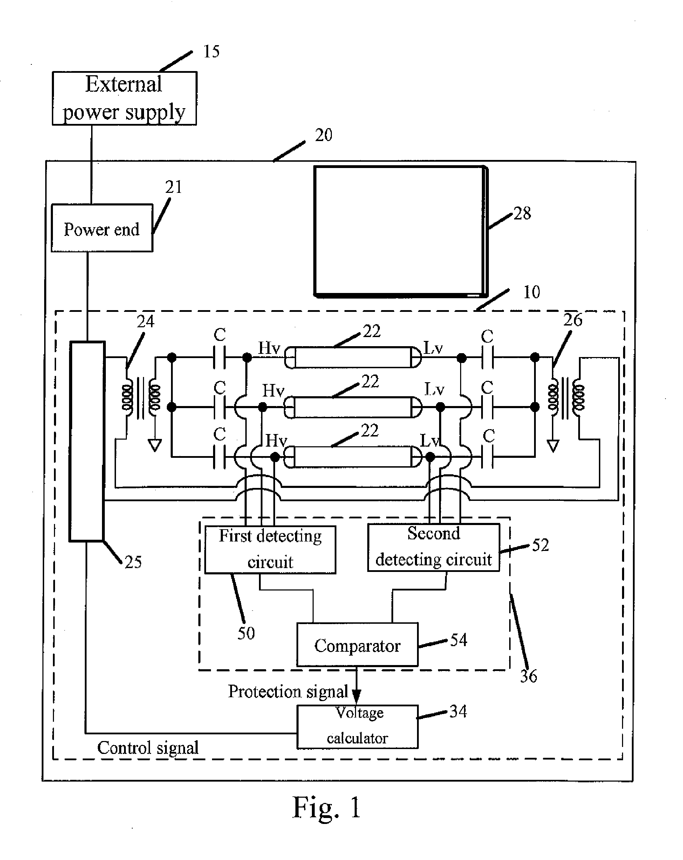

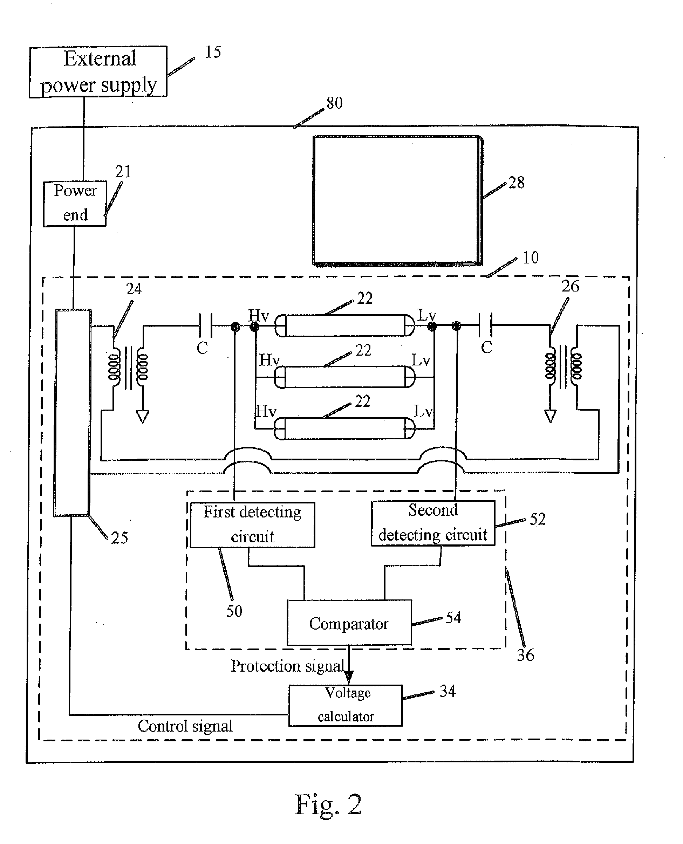

Referring to Fig. 1 and Fig. 2, Fig. 1 is a schematic diagram of a liquid crystal display (LCD) 20 according to an embodiment of the present invention, and Fig. 2 is a schematic diagram of an LCD 80 according to another embodiment of the present invention. The LCD 20 and the LCD 80 separately include a backlight module 10 and a backlight module 90. The backlight module 10, 90 include a power terminal 21, a few of lamp tubes 22, a driver 25, a first transformer 24, a second transformer 26, a few of ballast capacitors C, a voltage calculator 34, and a protection circuit 36. The power terminal 21 applies a supply voltage to the LCD 20, and acts as a connecting interface of an external power supply 15 (e.g., commercial alternating current, a battery, or other public power sources) and transmits alternating current from the external power supply 15 to the driver 25. A few of lamp tubes 22 are disposed below the LCD panel 28 for lighting the panel 28 of the LCD 20, and are Cold Cathode Fluorescent Lamps (CCFLs). One end of each of the lamp tubes 22 is a high-voltage end Hv and the other end of it is a low-voltage end Lv. Both of the ends are connected to a ballast capacitor C for preventing voltage applied to the high-voltage end Hv or the low-voltage end Lv from being unstable and then burning out the lamp tubes 22. The difference between the LCD 20 and the LCD 80 is the connection relation among the ballast capacitors C, the first transformer 24, the second transformer 26, and the lamp tubes 22. In Fig. 1, both ends of the ballast capacitor C are connected to the lamp tube 22 and to an output end of the first transformer 24 or the second transformer 26. In Fig. 2, one end of the ballast capacitor C is connected between the high-voltage end Hv of a few of the lamp tubes 22 and an output end of the first transformer 24, and one end of the other ballast capacitor C is connected between a low-voltage end Lv of a few of the lamp tubes 22 and an output end of the second transformer 26. The driver 25 includes some common circuits, such as a bridge converter, and is electrically connected to the voltage calculator 34, the first transformer 24, and the second transformer 26 for adjusting a input voltage from the power terminal 21 to apply a supply voltage based on a control signal transmitted from the voltage calculator 34. The supply voltage applied to the first transformer 24 and the second transformer 26 becomes a first driving voltage signal and a second driving voltage signal respectively. Then, the first and second driving voltage signals are individually transmitted to the high-voltage end Hv and the low-voltage end Lv of the lamp tube 22. The lamp tube 22 generates light based on the difference of the first driving voltage signal of the high-voltage end Hv and the second driving voltage signal of the low-voltage end Lv. Because the phase difference between the first driving voltage signal and the second driving voltage signal is 180 degrees and the amplitude of the two driving voltage signals is the same, the voltage difference of the high-voltage end Hv and the low-voltage end Lv of the lamp tube 22 is to double the amplitude of the first driving voltage signal. The LCD panel 28 includes a liquid crystal (LC) layer made of liquid crystal molecules. The liquid crystal molecules generate a variety of arrange angles based upon each image data, meanwhile, the lamp tubes 22 are controlled to light so as to display different gray-scale images.

Please continue to refer to Fig. 1 and Fig. 2. at the beginning, the driver 25 applies a supply voltage to the first transformer 24 and the second transformer 26 based on the alternating current from the power terminal 21, the first transformer 24 and the second transformer 26 respectively generate the first driving voltage signal and the second driving voltage signal based on the supply voltage, and the phase of the first driving voltage signal is opposite to the phase of the second driving voltage signal. The supply voltage applied to the first transformer 24 becomes the first driving voltage signal and the first driving voltage signal is output to the high-voltage end Hv of the lamp tubes 22; the supply voltage applied to the second transformer 26 becomes the second driving voltage signal and the second driving voltage signal is output to the low-voltage end Lv of the lamp tubes 22. Generally, the first driving voltage signal of the first transformer 24 and the second driving voltage signal of the second transformer 26 have opposite phase; that is, there is a 180-degree phase difference between the two signals, and the two driving voltage signals are of identical amplitude. For instance, if the lamp tubes 22 require a driving voltage with an amplitude value of 1200 volts, an amplitude value of the first driving voltage signal output by the first transformer 24 as well as that of the second driving voltage signal output by the second transformer 26 is 600 volts. Because the phase difference between the two signals is 180 degrees, the total amplitude value of the plurality of lamp tubes 22 is still 1200 volts.

To detect if the lamp tubes 22 are broken or if the ballast capacitors C crack or are poorly soldered, the protection circuit 36, electrically connected to the high-voltage end Hv and the low-voltage end Lv of each of the lamp tubes 22, detects variations in voltage and generates a protection signal based on the variations. The protection circuit 36 includes a first detecting circuit 50, a second detecting circuit 52, and a comparator 54. The first detecting circuit 50 is electrically connected to the high-voltage end Hv of each of the lamp tubes 22 and the ballast capacitor C for detecting voltage applied to the high-voltage end Hv of the lamp tube 22. The second detecting circuit 52 is electrically connected to the low-voltage end Lv of each of the lamp tubes 22 and the ballast capacitor C for detecting voltage applied to the low-voltage end Lv of the lamp tube 22.

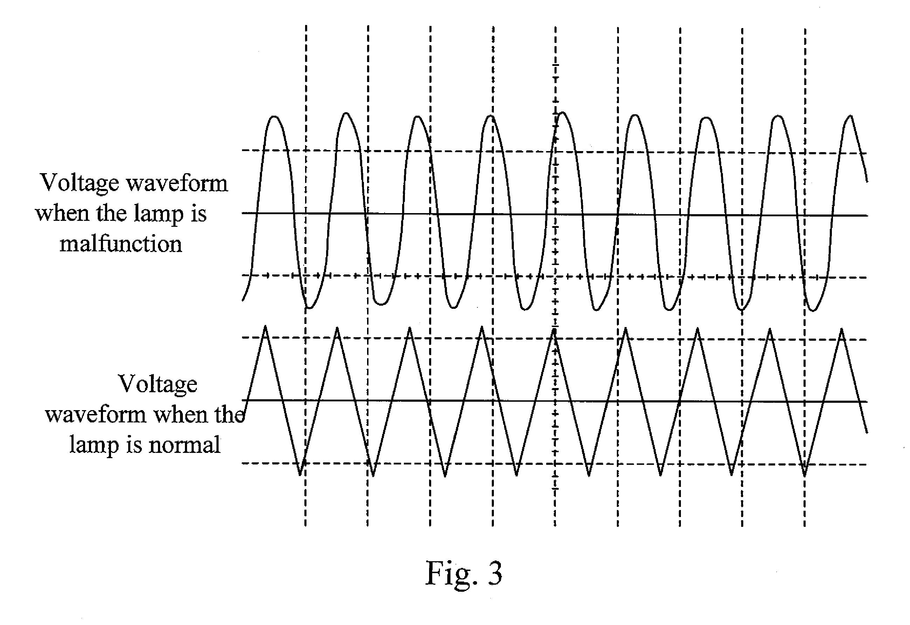

Please refer to Fig. 1, Fig. 2, and Fig. 3. Fig. 3 illustrates a voltage variation diagram in normal and abnormal states when the lamp tubes of the present invention are driven. The lamp tube 22 or the ballast capacitor C will have drastic variations in voltage once any of the tubes 22 is malfunction or any of the ballast capacitor C cracks or is poorly soldered. The comparator 54 generates a protection signal by comparing difference between the voltage detected by the first detecting circuit 50 and the voltage detected by the second detecting circuit 52. As shown in Fig. 3, the amplitude of the first driving voltage signal and the second driving voltage signal in a normal state differs from that in an abnormal state. The protection signal output by the protection circuit 36 is transmitted to the voltage calculator 34, which is a pulse-width modulated integrated circuit (PWM IC), for modulating the protection signal to generate control signals with different duty cycles and to output the control signals to the driver 25 based on the amplitude of the protection signal. For instance, the amplitude of the protection signal running through the output of the first detecting circuit 50 increases and exceeds a predetermined value corresponding to an abnormality of one of the lamp tubes 22. The voltage calculator 34 generates a control signal with a larger duty cycle based on the amplitude of the protection signal. Contrarily, the amplitude of the protection signal running through the outputs of the first detecting circuit 50 and the second detecting circuit 52 does not exceed the predetermined value when all of the lamp tubes 22 are in a normal state. The voltage calculator 34 generates a control signal with a smaller duty cycle based on the amplitude of the protection signal. Thus, the driver 25 can instantly adjust the supply voltage to decide the illumination state of the lamp tubes 22 or activate a corresponding protective function based on a duty cycle of the control signal. The protection circuit 36 directly detects voltages applied to the two ends of the lamp tube 22 and receives a feedback control signal by the calculating results of the voltage calculator 34. Hence, voltage level from the protection signal are not easily affected by dimming and temperature.

Although the present invention has been explained by the embodiments shown in the drawings described above, it should be understood to the ordinary skilled person in the art that the invention is not limited to the embodiments, but rather various changes or modifications thereof are possible without departing from the spirit of the invention. Accordingly, the scope of the invention shall be determined only by the appended claims and their equivalents.

## Claims

1. A liquid crystal display (20, 80) comprising a liquid crystal display panel (28), a lamp tube (22) comprising a first end and a second end, a driver (25) comprising an input end electrically connected to an external power supply (15) for inverting the signal of the external power supply (15) into a supply voltage based on a control signal, a first transformer (24) electrically connected to the first end of the lamp tube (22) for converting the supply voltage into a first driving voltage signal, and outputting the first driving voltage signal to the first end of the lamp tube (22), a second transformer (26) electrically connected to the second end of the lamp tube (22) for converting the supply voltage into a second driving voltage signal, and outputting the second driving voltage signal to the second end of the lamp tube (22), **characterized in that** the liquid crystal display (20, 80) further comprises:
a plurality of ballast capacitors (C) electrically connected to the first end and the second end of the lamp tube (22);
a first detecting circuit (50) electrically connected to the first end of the lamp tube (22), for detecting voltage applied to the first end of the lamp tube (22);
a second detecting circuit (52) electrically connected to the second end of the lamp tube (22), for detecting voltage applied to the second end of the lamp tube (22); and
a comparator (54) electrically connected to the first detecting circuit (50) and the second detecting circuit (52), for generating a protection signal based on a difference between the voltages applied to the first and second ends of the lamp tube (22), wherein the driver (25) adjusts the supply voltage in response to an amplitude of the protection signal in excess of a predetermined value corresponding to an open-circuit of the lamp tube (22); and
a voltage calculator (34) electrically connected to the comparator (54) and the driver (25), for generating a control signal having a duty cycle depending on the amplitude of the protection signal,
wherein a phase difference between the first driving voltage signal and the second driving voltage signal is 180 degrees.

2. A liquid crystal display (20, 80) comprising a liquid crystal display panel (28), a lamp tube (22) comprising a first end and a second end, an driver (25) comprising an input end electrically connected to an external power supply (15) for inverting the signal of the external power supply (15) into a supply voltage based on a control signal, a first transformer (24) electrically connected to the first end of the lamp tube (22) for converting the supply voltage into a first driving voltage signal, and outputting the first driving voltage signal to the first end of the lamp tube (22), a second transformer (26) electrically connected to the second end of the lamp tube (22) for converting the supply voltage into a second driving voltage signal, and outputting the second driving voltage signal to the second end of the lamp tube (22), **characterized in that** the liquid crystal display (20, 80) further comprises:
a first detecting circuit (50) electrically connected to the first end of the lamp tube (22), for detecting voltage applied to the first end of the lamp tube (22);
a second detecting circuit (52) electrically connected to the second end of the lamp tube (22), for detecting voltage applied to the second end of the lamp tube (22); and
a comparator (54) electrically connected to the first detecting circuit (50) and the second detecting circuit (52), for generating a protection signal based on a difference between the voltages applied to the first and second ends of the lamp tube (22), wherein the driver (25) adjusts the supply voltage in response to an amplitude of the protection signal in excess of a predetermined value corresponding to an open-circuit of the lamp tube (22).

3. The liquid crystal display (20, 80) of claim 2, **characterized in that** the lamp tube (22) is a Cold Cathode Fluorescent Lamp (CCFL).

4. The liquid crystal display (20, 80) of claim 2, **characterized in that** a phase difference between the first driving voltage signal and the second driving voltage signal is 180 degrees.

5. The liquid crystal display (20, 80) of claim 2, **characterized in that** the liquid crystal display further comprises a voltage calculator (34) electrically connected to the comparator (54) and the driver (25), for generating a control signal having a duty cycle depending on the amplitude of the protection signal.

6. The liquid crystal display (20, 80) of claim 2, **characterized in that** the liquid crystal display further comprises a plurality of ballast capacitors (C) electrically connected to the first end and the second end of the lamp tube (22).

7. A backlight module (10) comprising, a lamp tube (22) comprising a first end and a second end, an driver (25) comprising an input end electrically connected to an external power supply (15) for inverting the signal of the external power supply (15) into a supply voltage based on a control signal, a first transformer (24) electrically connected to the first end of the lamp tube (22) for converting the supply voltage into a first driving voltage signal, and outputting the first driving voltage signal to the first end of the lamp tube (22), a second transformer (26) electrically connected to the second end of the lamp tube (22) for converting the supply voltage into a second driving voltage signal, and outputting the second driving voltage signal to the second end of the lamp tube (22), **characterized in that** the backlight module further comprising:
a first detecting circuit (50) electrically connected to the first end of the lamp tube (22), for detecting voltage applied to the first end of the lamp tube (22);
a second detecting circuit (52) electrically connected to the second end of the lamp tube (22), for detecting voltage applied to the second end of the lamp tube (22);
a comparator (54) electrically connected to the first detecting circuit (50) and the second detecting circuit (52), for generating a protection signal based on a difference between the voltages applied to the first and second ends of the lamp tube (22), wherein the driver (25) adjusts the supply voltage in response to an amplitude of the protection signal in excess of a predetermined value corresponding to an open-circuit of the lamp tube (22).

8. The backlight module (10) of claim 7, **characterized in that** the lamp tube (22) is a Cold Cathode Fluorescent Lamp (CCFL).

9. The backlight module (10) of claim 7, **characterized in that** a phase difference between the first driving voltage signal and the second driving voltage signal is 180 degrees.

10. The backlight module (10) of claim 7, **characterized in that** the backlight module (10) further comprises a voltage calculator (34) electrically connected to the comparator (54) and the driver (25), for generating a control signal having a duty cycle depending on the amplitude of the protection signal.

11. The backlight module (10) of claim 7, **characterized in that** the backlight module (10) further comprises a plurality of ballast capacitors (C) electrically connected to the first end and the second end of the lamp tube (22).
